Europäisches Patentamt

European Patent Office

Office européen des brevets

(11) Publication number : **0 541 403 A2**

# EUROPEAN PATENT APPLICATION

(21) Application number : 92310228.9

(22) Date of filing : 09.11.92

(51) Int. Cl.⁵ : **B07C 5/344,** B07C 5/36,
B03B 9/06

(30) Priority : **08.11.91 US 790251**

(43) Date of publication of application :
**12.05.93 Bulletin 93/19**

(84) Designated Contracting States :
**AT BE CH DE DK ES FR GB GR IE IT LI LU MC
NL PT SE**

(71) Applicant : **NATIONAL RECOVERY
TECHNOLOGIES INC.
566 Mainstream Drive
Nashville, Tennessee 37288-1223 (US)**

(72) Inventor : **Sommer, Edward J., Jr.
1908 Beechwood Avenue
Nashville, Tennessee 37212 (US)**
Inventor : **Kearley, James A.
10207 Davidson Road
Nashville, Tennessee 37205 (US)**
Inventor : **Roos, Charles E.
2507 Ridegewood Drive
Nashville, Tennessee 37215 (US)**

(74) Representative : **Mercer, Christopher Paul et al
Carpmaels & Ransford 43, Bloomsbury Square
London WC1A 2RA (GB)**

(54) Aluminum recovery system.

(57) A system for separating ferrous and non-ferrous metals and non-metals has a first electronically activated electromagnetic phase lock loop separator and a second electromagnetic eddy current separator in a single enclosure. Anti-bounce curtains are incorporated into both separators to prevent missed detections from items which have bounced out of detection range. The phase lock loop separator has a two stage stepped slide to improve accuracy and employs detector coils in a staggered relationship on opposite sides of the slide to reduce crosstalk. The eddy current electromagnetic separator has a magnet coil formed by twisting individual strands of insulated wire to form a wire rope which is inserted into cooling passages having a low electrical conductivity cooling medium. A metal detector coil used to activate the magnet when metal is detected has an improved "figure eight" geometry which results in a near zero magnetic field in the interior portion of the coil. This allows the coil to be located directly over the strongest field region of the magnet, thus reducing timing errors in firing the magnet.

EP 0 541 403 A2

## Background of the Invention

### Field of the Invention

The invention relates to the separation of materials of different components. In particular, the invention relates to the separation and classification of materials based on their electrical properties. The invention is of particular importance in the separation of particles in a mixture of ferrous and non-ferrous metallic and non-metallic particles. For example, the invention is useful for the recovery of such articles from solid waste material.

### Description of the Related Art

In numerous applications, in particular for sorting recyclable materials, it is desirable to separate particles in a mixture of ferrous and non-ferrous metals and non-metallic constituents. Earlier solid waste material treatment systems generally employed a series of metal and glass separation steps after shredding and air classification. An electromagnetic eddy current materials separator was disclosed by Sommer in U.S. Patent 4,069,145, which is incorporated herein by reference. An electromagnet is energized by current pulses, pulsing the magnet several times. This causes eddy currents to be developed in particles in the field of influence of the magnet. As a result, a repulsive force, which varies directly with the conductivity of the material, is developed between the magnet and the particles. The momentum with which the particles are repelled from the magnet varies directly with the number of current pulses occurring while each particle is within the magnet's field of influence.

While eddy current principles were know prior to U.S. Patent 4,069,145 earlier systems used a single, relatively large current pulse to activate the eddy current magnet. It was known that a rapid change in current through an inductor would produce a magnetic field whose flux would be cut by any material lying within the resulting magnetic field. Since the flux varies with time and any conductive material within the field cannot link such a time varying flux, an eddy current is produced in the conductive material so as to produce a zero net flux passing through the material. This eddy current has a magnetic field associated with it which exerts a repelling force on the first magnetic field. If the electromagnet is fixed in position and the other material is free to move, the material in which the eddy current has been induced will be repelled from the magnet. The repulsive force varies directly with the value of the eddy current which, depends, among other things, upon the electrical conductivity of the material. In order to improve effectiveness and efficiency of repulsion of non-ferrous materials by the eddy current magnet, U.S. Patent 4,069,145 discloses using a plurality of relatively low amplitude current pulses to activate the magnet, rather than a single large current pulse. Such low current pulses are typically too small to give rise to sufficient repulsive force to affect separation of non-ferrous material from a feedstream. However, the cumulative effect of the plurality of successive pulses is sufficient to affect separation of non-ferrous metal from the feedstream.

U.S. Patent 4,031,004 to Sommer, also incorporated herein by reference, discloses a feed system for such an electromagnetic eddy current separator. The trajectory of the feed stock is mechanically altered by a deceleration slide so that the feed stock material, including the non-ferrous metals therein, enters the region of strongest influence of the magnetic field on a course parallel to the face of the eddy current magnet. This causes non-ferrous metals, such as flattened aluminum cans, to align themselves on the deceleration slide and maximize their area of cross section to the perpendicular component of the magnetic field of the eddy current magnet during their entry to the region of strongest influence of the magnetic field. This results in the non-ferrous metal being ejected from the region of the strongest influence of the magnetic field on a trajectory that provides a more positive and efficient separation of the aluminum can from the feedstream.

Other processes for separating ferrous and non-ferrous metallic and non-metallic particles in a mixture of particles include a detection system using a coil and a phase-lock loop (PLL), as disclosed in U.S. Patent 4,541,530 and 4,718,559, both to Kenny et al., both incorporated herein by reference. In this system., a phase-lock loop circuit and a coil circuit form a feedback loop, which enables the coil to be driven at a natural electrical resonant frequency of the detector coil inductance and a parallel tank circuit capacitance. The value of the coil inductance changes as a function of proximity of an electrical conductor. As a result, the operating frequency of the phase-lock loop circuit changes to follow the natural tank frequency. During the frequency change interval, the phase-lock loop circuit produces an error signal which can be used to activate an extraction or separating mechanism. One such extraction mechanism is an air valve located downstream from the detection coil and activated after an appropriate time delay, based on the distance between the coil and the air valve, to cause one type of material to be ejected. Only rapid changes in frequency are allowed to activate the air valve so that the proximity of stationary electrical conductors does not significantly reduce the sensitivity of the detection system.

Kenny '530 and Kenny '559 both disclose that such a system could be used as a mid-step in a process which begins with homogenizing and magnetically treating components of the waste, and ends with isolating the metallic concentrate as a high-purity metal fraction. The high-purity aluminum may then be isolated using the separation process described in U.S. Patent 4,069,045.

While Kenny '530 and '559 state that the system disclosed therein can be combined with that disclosed in U.S. Patent 4,069,145, numerous practical difficulties exist. These include the difficulty of interconnecting two such systems in separate enclosures and collecting the concentrate produced by the phase-lock loop based system and conveying it to the high-purity separator of Sommer. In addition, there is no provision for eliminating larger items which can jam the conveyer of the high-purity separator. Moreover, both systems fail to provide for minimizing the effects of bouncing materials which can cause eddy current metal detectors to miss aluminum cans in the feed material if they bounce too far above the surfaces of slide carrying the materials and around which detectors are mounted. Moreover, the efficiency of separation, as a result of the mechanical configuration of such systems, has been less than desired.

System efficiency and sensitivity has also been reduced by cross talk between coils in the phase-lock loop systems. In addition, such systems are subject to tuning drift as a result of thermal effects on the circuitry.

In high-purity separation systems, the metal detection coil has heretofore been placed nearly a foot upstream from the eddy current magnet to protect the inductive pick-up coil from damage by the intense magnetic fields generated at the magnet. This arrangement has the disadvantage that the time between detection of aluminum cans and firing of the magnet is sufficiently long that variations in feed material speed significantly affect performance of the system. In addition, while this distant placement of the detection coil reduces inductive pickup, a level of pickup still exists, particularly when metal in the feed stream distorts the magnetic field from the magnet.

Problems have arisen in high-purity separators as a result of magnet design. It is desirable to construct high efficiency magnets which are easily cooled. Finally, it is desirable to simplify the drive circuitry used for the eddy current electromagnet of the high-purity separator.

## Summary and Objects of the Invention

In view of the above limitations of the related art, it is an object of the invention to provide a system in which a phase-lock loop electronically activated separator is assembled in a single enclosure with a high-purity magnetic separator employing eddy current separation methods.

It is a further object of the invention to provide a live edge roller at the edge of a conveyer to collect concentrate from the phase-lock loop separator to be conveyed to a high-purity separator.

It is a still further object of the invention to provide a bar screen over the conveyer which collects concentrate from the phase-lock loop separator to eliminate larger items which can jam the conveyer and the high-purity separator.

It is still another object of the-invention to minimize bouncing of materials as they are fed onto the slides of the phase-lock loop and high-purity separators using, for example, anti-bounce curtains.

It is still another object of the invention to improve the efficiency of the phase-lock loop system by making the angle of inclination of the slide assembly adjustable to maximize efficiency, and to incorporate a two stage slide having a step at the end of the first stage to cause materials to tumble without bouncing, so as to reposition materials not detected by the first stage within the feed.

It is a still further object of the invention to maximize the transfer of momentum from air valves to the objects being ejected by constructing the air paths through the nozzle to be of equal effective length.

It is a further object of the invention to reduce cross talk among eddy current coils of the phase-lock loop separator by staggering the coils across the slide.

It is still another object of the invention to reduce thermally or otherwise induced frequency drift effects in the eddy current metal resonance circuit by incorporating a self-tuning capability which switches capacitors in and out of the circuit to maintain the resonant frequency within a narrow band about an optimum frequency.

It is still another object of the invention to improve the accuracy of the timing between detection and magnet firing in the high-purity separator.

It is a still further object of the invention to maintain the net magnetic field within the interior region of the metal detection coil at nearly zero, to minimize inductive pickup by the detection coil from the magnet.

A still further object of the invention is to place the face portion of the eddy current magnet so that the magnetic field from the magnet experiences a spatial reversal within the interior region of the detection coil.

It is still a further object of the invention to form the detection coil in a geometry that causes cancellation of inductive pickup.

It is still another object of the invention to form the detection coil in a "figure eight" geometry in which inductive pickup of one of the loops of the figure eight adds to and cancels the inductive pickup from the other loop of the "figure eight."

It is a still further object of the invention to provide an improved magnet design for a high-purity separator incorporated with an electronically activated separator.

It is still another object of the invention to provide an improved eddy current magnet incorporating a wire rope made from a plurality of strands of individual wires insulated from each other.

It is still another object of the invention to cool such an eddy current magnet in a cooling medium of very low electrical conductivity.

A still further object of the invention is to prevent inductive loss of energy from an eddy current magnet, for example, using a casing of nonconductive material.

It is a still further object of the invention to provide an eddy current electromagnet drive circuit of reduced complexity which is less expensive to assemble than those of conventional designs.

Brief Description of the Drawings

The invention is disclosed in detail with reference to the figures in which:

Figure 1 shows an overall system diagram according to the invention;

Figure 2 illustrate a prior art electronically activated non-ferrous metals separator;

Figure 3 is an electrical block diagram of the prior art electronically activated detector shown in Figure 2;

Figure 4 shows an electronically activated separating portion of a system according to the invention;

Figure 5 is a detailed view of an adjustable slide assembly of the electronically activated separating system of the invention;

Figure 6 is a top view of a stage of the slide assembly of the electronically activated separating section showing staggered detection coils;

Figure 7 illustrates an air nozzle assembly of an ejection mechanism in the electronically activated portion of the invention;

Figure 8 illustrates a self-tuning circuit to reduce thermal effects causing drift of the resonant frequency of eddy current metal detection;

Figure 9 illustrates a prior art electromagnetic eddy current materials separator;

Figure 10 is a profile of the magnitude of the square of the intensity of the perpendicular component of he magnetic field of the eddy current magnet, as a function of position across the face of the magnet;

Figure 11 shows a top view of the metal detector coil geometry of the invention;

Figure 12 shows the magnetic field profile of the metal detector coil of the invention in a side view of the coil placed over a portion of the face of the eddy current magnet;

Figure 13a illustrates a prior art electromagnet;

Figure 13b illustrates another prior art electromagnet;

Figure 14 illustrates an electromagnet according to the invention for high purity electromagnetic separation;

Figure 15 shows an electromagnet drive circuit according to the invention;

Figure 16 shows a cross section of an electromagnetic separating portion of the unit for high purity separation.

The above and other objects of the invention are accomplished in an aluminum recovery system which. incorporates improved phase-lock loop and high-purity separators in a single unit. Material including particles for separation, which may be, optionally, preprocessed to remove certain substances such as glass and the majority of ferrous materials, is routed to a first electronically activated separating portion operating in accordance with known phase-lock loop principles. Material is introduced onto a slide which has at least two stages so that materials, such as aluminum cans, tumble without bouncing so as to be repositioned within the feed if they are not detected by the first stage. The slide angle of inclination can be made adjustable and the conveyer inclined so that its angle is greater than the angle of repose of the material being fed. This causes piled material to fall back along the conveyer which provides a leveling action to improve performance. Anti-bounce curtains at the input of the acceleration slide minimize bouncing of materials to be separated as they are feed onto the slide. A live edge roller at the edge of the conveyor helps move the concentrate from the first separator to the second high-purity separator, which also incorporates anti-bounce curtains.

Within the first phase-lock loop separator, eddy current coils are staggered across the slide to optimize the signal to noise ratio and minimize cross talk between the coils, thereby improving the sensitivity for detection. A self-tuning circuit accounts for frequency drift in the eddy current metal detection resonant circuit by switching capacitors in and out as required to maintain the resonant frequency within a narrow range about an optimum frequency.

In the high-purity detector, the metal detector coil is placed directly over the magnetic phase to improve the accuracy of the timing between material detection, e.g., aluminum cans, and magnetic firing. The detection coil is placed over a portion of the face of the eddy current magnet so that the magnetic field from the magnet undergoes a spatial reversal within the interior region of the detection coil. At any given time, the magnetic field within the interior region of the detection coil is nearly zero, thereby minimizing inductive pick up by the detection coil from the magnet. The metal detection coil incorporates a "figure eight" geometry to further minimize inductive pick up. The "figure eight" geometry acts so that any inductive pick up by one of the loops of the "figure eight" adds to cancel the inductive pick up from the other loop of the "figure eight."

A multi-strand magnet according to the invention is formed using individually insulated wires twisted together to form a wire rope. The radius of a wire strand is equal to the skin depth of penetration of the electromagnetic energy at the frequency of operation. The magnet is cooled by bathing the multi-stranded wire rope in a cooling medium of very low electrical conductivity, such as deionized water or a mixture of deionized water and ethylene glycol. The magnet is cased in a nonconductive material to prevent inductive loss of energy while providing a conduit for the cooling medium.

Finally, the inductive circuitry used for the eddy current magnet is a simple pumped resonant circuit employing a current limiting feed inductor, a high current silicon controlled rectifier (SCR) switch and associated control circuitry, an eddy current magnet inductor, and an eddy current magnet resonance capacitor.

## Detailed Description of the Preferred Embodiments

An apparatus for separating particles in a mixture of ferrous and non-ferrous metallic and non-metallic materials, according to the invention, has an intake disposed to receive the particles and deposit them on a first conveyor. The first conveyor delivers the particles to a multi-stage slide in which the stages are disposed end-to-end. The particles fall from the conveyor onto the first stage of the slide. Each additional stage of the slide is physically positioned in a discontinuous, stepped relationship with the preceding stage so that unejected particles from each stage tumble to the next succeeding stage of the multi-stage slide.

Each stage of the slide has a detector coil array. The inductance of a coil within the array changes depending on the proximity of non-ferrous materials. A circuit for generating a frequency phase error signal responds to the changing inductance of the coil and a particle removal mechanism is activated by the frequency phrase error signal to eject particles having previously determined properties. The ejected and unejected particles are then deposited in different locations.

Other features of the invention include antibounce curtains positioned at the first stage of the multi-stage slide to contact the particles entering the slide and reduce bouncing of the particles. The slope of the slide or its stages can be adjusted as can the angle of inclination of the conveyor. By adjusting the conveyor angle of inclination, particles pile on the conveyor and fall back to approximately the same vertical height. The particle removal mechanism is typically an air nozzle activated at a time relative to the phase error signal to eject predetermined particles into one of the deposit locations. The momentum imparted to the particles by each air nozzle is made approximately equal by equalizing the effective length of the air paths through respective nozzles. To improve sensitivity, the multi-stage slide has a plurality of detector coils located on opposite sides of the slide in a staggered relationship laterally across from one another. The frequency phase error signal is generated by a self-tuned resonant circuit which has a plurality of capacitors switched in and out to maintain a resonant frequency within a predefined range of a predetermined resonant frequency. As described above, this first portion of the apparatus can be used to separate metallic concentrate and deposit nonmetallic residue in various deposit locations.

A second portion of the apparatus can be used to effect a high-purity aluminum separation process. Metallic concentrate from the first portion of the apparatus is delivered to a second conveyor which carries the particles to a second slide. An eddy current magnet is arranged to have a magnetic face portion over which the second slide passes and over which the particles travel. A metal detection coil is disposed over the eddy current magnet so that a magnetic field from the magnet undergoes a spatial reversal within an interior region of the detector coil. As a result, the net magnetic field within the interior region of the detector coil is approximately zero. The detector coil itself is made of wire coiled in a "figure eight" shape having a pair of loops, so that inductive pickup in one of the loops acts to cancel inductive pickup in the other of the loops.

The eddy current magnet is formed from a plurality of individually insulated wire strands twisted together in the form of a rope. The number and thickness of the wire strands is selected based on the magnetic operating frequency. Specifically, the radius of each wire in the strand is equal to the skin depth of penetration of electromagnetic energy of the frequency of operation of the magnet. Thus the radius of the wire is given by the expression:

$$\frac{C}{\sqrt{2\pi\mu\omega\sigma}}$$

where C = the speed of light, $\mu$ = the permeability of the wire, $\omega$ = two pi times the frequency, and $\sigma$ = the conductivity of the wire. The magnet is cooled by bathing the twisted wire strands roped together in a cooling medium of very low electrical conductivity, such as deionized water or a mixture of deionized water and ethylene glycol. A non-conductive casing is provided around the magnet to prevent inductive loss of energy from the magnet to the casing, while providing a conduit for the cooling medium.

The eddy current magnet is energized by a simple pumped resonant circuit with a high voltage DC power supply connected in series to a current limiting feed inductor. The inductor is connected to a silicon controlled rectifier gated by control circuitry. The output of the silicon controlled rectifier is connected to the eddy current magnet resonance capacitor and inductor, which are in parallel.

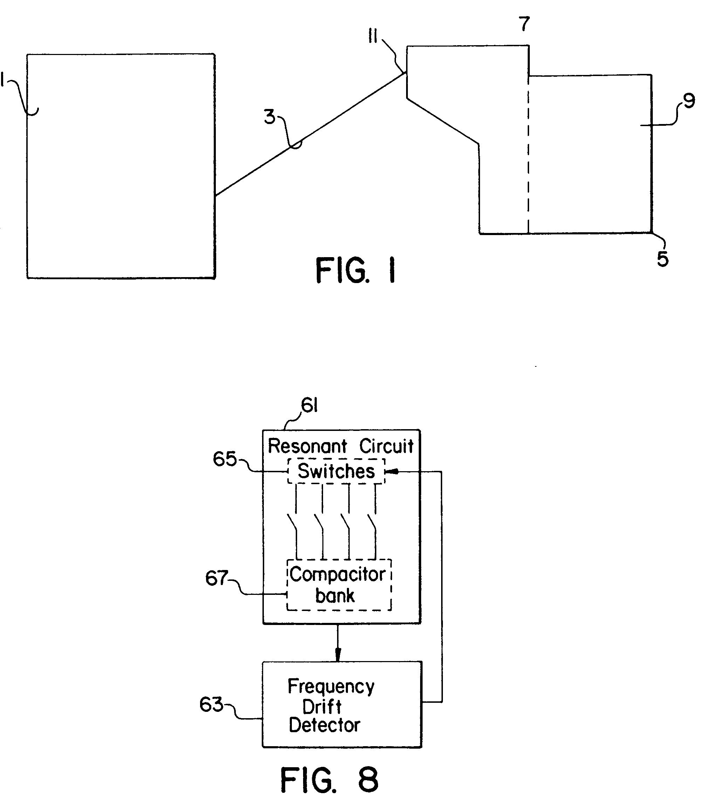

Figure 1 shows an overview of the system incorporating a sorter according to the invention. A preprocessor 1 can be optionally employed to remove ferrous metals and glass and grit humus. Typically, solid waste material is subjected to a homogenizing step followed by a magnetic separation step in which most ferrous content is removed. The homogenizing may be shredding, flail milling, mixing or screening. Process material may then be transported via conveyor 3 to a single separating unit 5 having first and second sections 7 and 9, respectively. The first section 7 is used for selective non-magnetic detection of non-ferrous materials. A mechanical system, such as a solenoid and trap door arrangement, or a pneumatic system is triggered to separate non-ferrous metallic particles from non-metallic particles by an electronic system in which ferrous conductors are ignored. Aluminium, or other metals are then transported to second section 9, which employs an electromagnetic eddy current materials separator. This separator operates on the principle of electrically induced eddy current repulsion as the means for accomplishing the separation of material. When separated, the materials can then be deposited at separate locations.

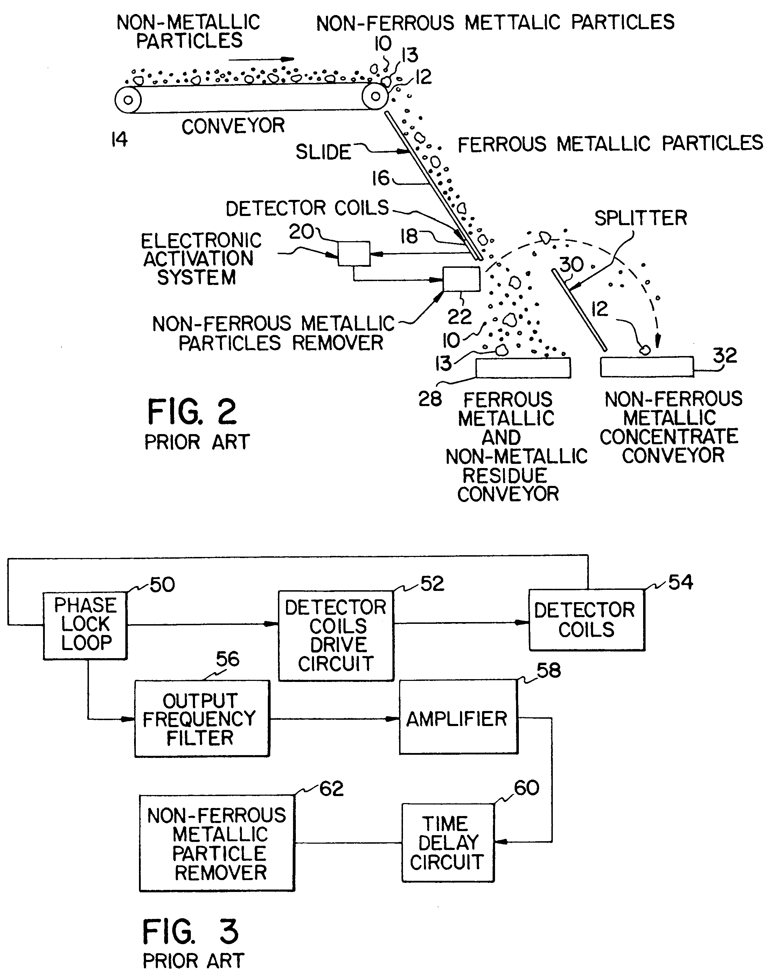

Figure 2 illustrates a prior art electromagnetic detection system for non-ferrous metallic particles. As shown, conveyor 114 conveys solid waste in the form of non-metallic particles 110, ferrous metallic particles 113 and non-ferrous metallic particles or agglomerates or masses 12 along conveyor 114 and then down slide 116 until they pass in the vicinity of detector coils 118. Detector coils 118 in association with electronic activation system 120 activate particle remover 122. As Figure 2 shows, particles slide down slide 116 and pass detector coil 118. This causes a change in the value of the inductance of the coil.

As shown in Figure 3, the prior art electronic detector employs a phase-lock loop 150, and detector coil drive circuit 152 along with detector coils 154. This forms a feedback loop in which the coil is driven at an electrical resonant frequency determined by a quiescent coil inductance with a parallel tank circuit capacitance. As the value of the inductance changes due to the proximity of an electrical conductor, the operating frequency of the phase-lock loop changes and an error signal is produced. The error signal undergoes high pass filtering in output frequency filter 156 and is amplified in amplifier 158 to drive a time delay circuit 160. Time delay circuit 160 activates the non-ferrous metallic particle remover 162 at an appropriate time to eject the separated materials.

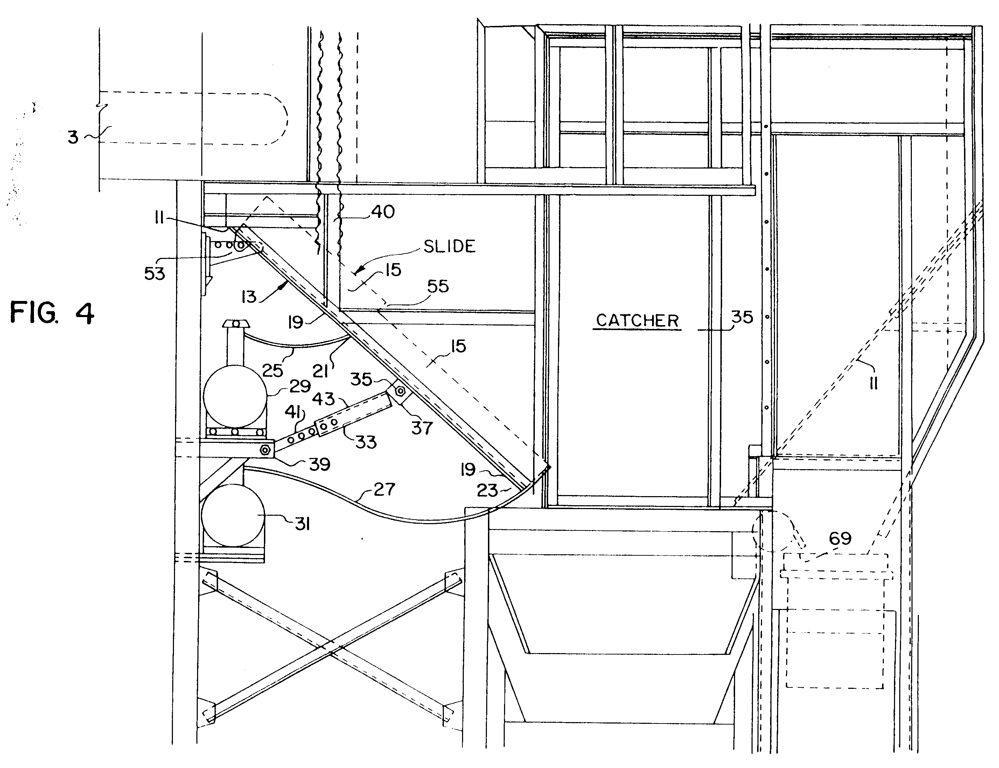

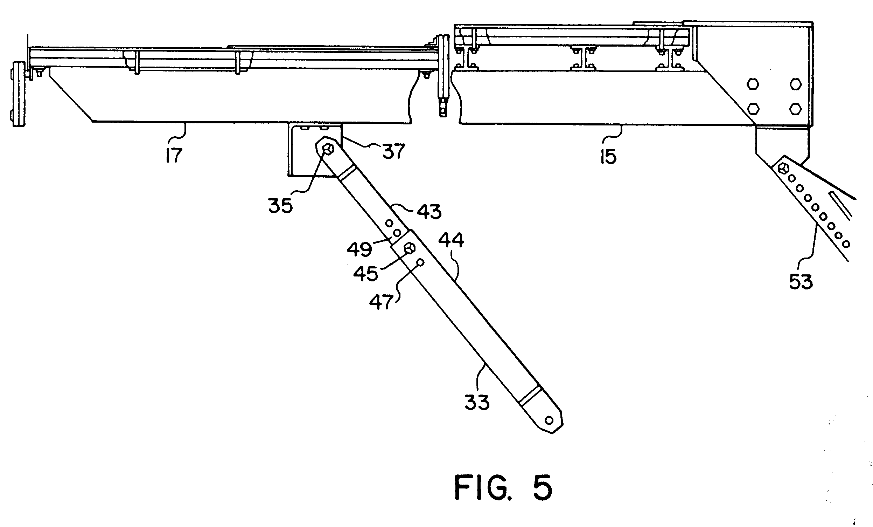

Figure 4 is a sectional view of an electronically activated separating portion of a system according to the invention. Conveyor 3 transports materials to be separated to an input section 11 where the materials are dropped onto slide 13. Slide 13 can have multiple stages arranged in a serial fashion to form steps between the stages. Figures 4 and 5 show two stages 15 and 17, although additional stages may be employed. Each stage has at least one detector coil 19 and a corresponding ejection mechanism, such as air nozzles 21 and 23 are connected through air conduits or hoses 25 and 27 to air reservoirs 29 and 31, respectively.

The angle of inclination of slide 13 is adjustable using adjuster 33. Numerous adjustment mechanisms can be used, as is known to those of ordinary skill in the art. As shown in Figures 4 and 5, the adjustment mechanism has a pivotal connection 35 to a bracket 37 attached to slide 13. Adjuster 33 is further pivotally connected at its opposite end to a bracket 39. The length of the slide is further adjustable by changing the positioning of slide adjuster segments 41 and 43, for example, using connector 45 through selected holes 47 and 49 of segments 41 and 43, respectively.

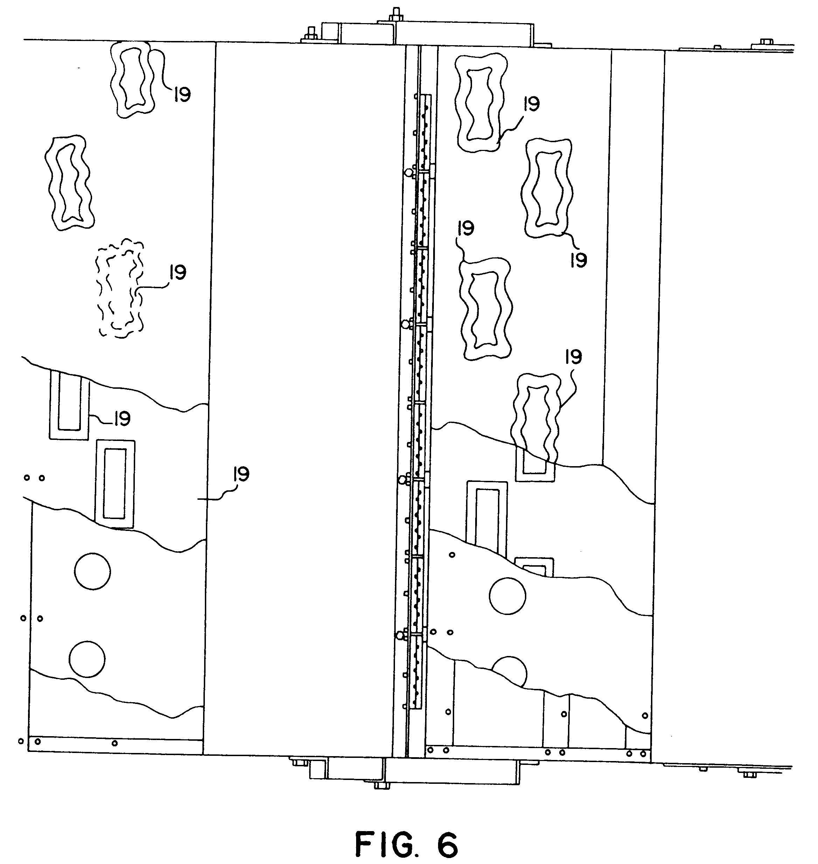

The top view of the slide in Figure 6 shows detector coils 19 placed in a staggered relationship at opposite sides of the slide stage, so that materials to be separated pass over the staggered coils as they travel down the slide stage. As previously discussed, it is known to use an eddy current coil in a phase-lock loop circuit to cause a change in frequency as a result of inductance changes produced by the proximity of ferrous and non-ferrous materials to the coils. This allows an error signal to be generated to activate the ejection mechanisms such as air nozzles 21 and 23, at appropriate times. According to the present invention, a plurality of such eddy current coils are placed at end segments of the slide in a staggered relation. This minimizes cross talk between the coils and improves the sensitivity of detection by causing the coils to be physically separated from each other to a greater extent than would be possible if the coils were placed side by side.

Material for separation that enters slide 13 is dropped from conveyor 3 and is subject to bouncing of the materials as they are fed onto the slide. As a result, the eddy current metal detectors 19 may miss aluminum cans or other items in the feed material, because they have bounced too far above the slide surface to be detected. In order to reduce such bouncing, curtains 51 are suspended above slide 13 near input section 11. The curtains are arranged to make contact with items as they bounce vertically and to prevent their further travel down the slide. Thus, the only items which pass beneath the curtains are those which are within the vertical detection range of the detector coils.

As previously discussed, the slope of the slide is adjustable with slide adjustment mechanism 33. It should also be noted that an additional adjustment mechanism 53 can be provided at the upper end of the slide 13. As shown in Figures 4 and 5, this can be accomplished with a simple pin and bracket mechanism, or any other means as would be known to those of ordinary skill.

Also as previously discussed, slide 13 has multiple stages. For example, step 55 at the end of stage 15 causes materials not ejected from stage 15 to tumble without bouncing onto stage 17. Thus, material, such as aluminum cans, are repositioned within the feed, if they were not detected by the first stage. This improves the efficiency of separation over conventional systems which use only one stage.

It should further be noted that the inclination of conveyor 3 feeding the system can be arranged so that the angle of incline is beyond the angle of repose of the materials to be separated being fed. This causes piled material to fall back along the conveyor as it is transported, giving a feed leveling action which improves performance of the system.

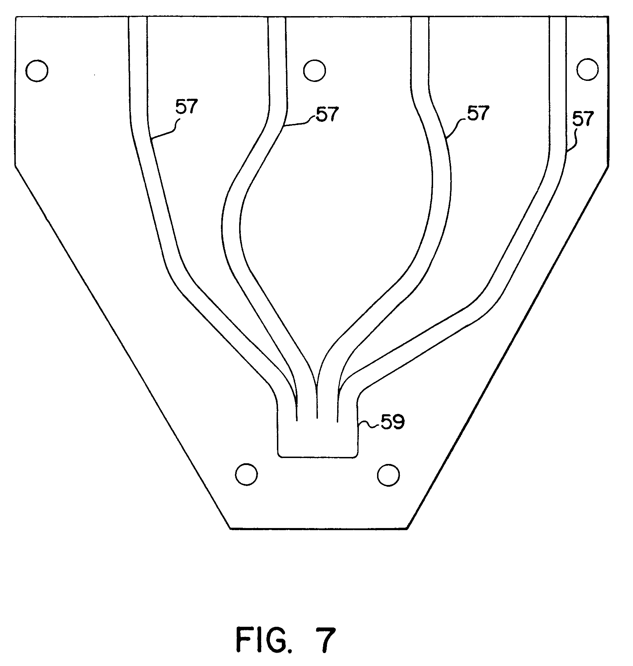

As previously discussed, based on an error signal generated by a phase-lock loop circuit in response to inductance changes of the detector coils, air nozzles are activated at appropriate times to cause materials to be ejected, for example, into catcher 55. Of course, a plurality of catchers can be used as deposit locations for different types of material. However, in order to assure that sufficient energy is imparted to the ejected materials to place them in the catchers, it is helpful to maximize the transfer of momentum from the air to the object being ejected. This can be accomplished by arranging all air paths through the nozzles to be of equal effective length. Figure 7 shows an upper air nozzle front plate which has a plurality of air paths 57 of equal effective length. Air enters common portion 59 after being transported from an air reservoir. Air channels 57 are configured so that the effective length of travel of air from common portion 59 to any nozzle is the same. As a result, each nozzle can transfer the maximum momentum of the air to the object being ejected.

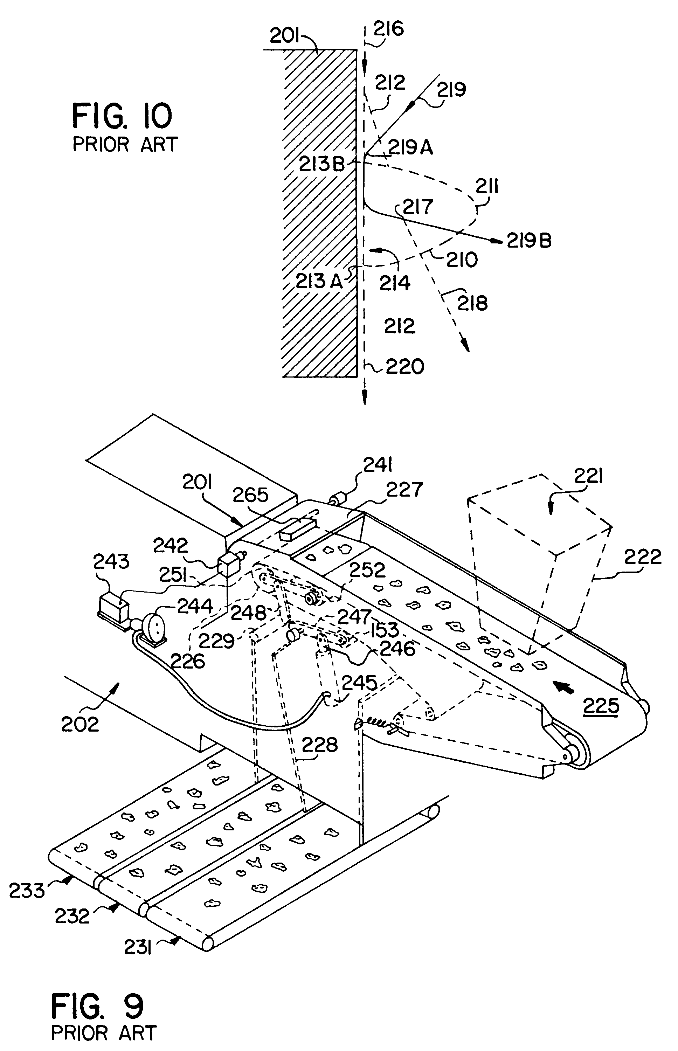

Figure 8 illustrates an eddy current metal detection resonance circuit with self-tuning capability. The resonant frequency may drift from the optimum frequency as a result of thermal effects on the circuitry. Thus, drifts in the resonant frequency of resonant circuit 61 are detected by frequency drift detector 63. This causes switches 65 to switch capacitors in capacitor bank 67 into and out of resonant circuit 61, causing a correction in the resonant frequency. Such self-tuning can be done on a continuous or sampled basis and improves the accuracy of the system.

As previously discussed, according to the invention, concentrate material which has not been separated out into catchers 55 at the end of the electronically activated separating process can be further separated in a high-purity aluminum separator using magnetic techniques. In order to accomplish this, a live edge roller 69 collects the concentrate for further separation and delivers it to a conveyor for transport to the second sorting mechanism within the enclosure. It should be noted that large items, such as cardboard, can jam the conveyor. To avoid this difficulty, bar screen 71 is placed over the conveyor collecting the concentrate to eliminate the larger items, which can cause material jams. Thus, only smaller items are conveyed to the magnetic separation section for separation of high-purity aluminum using eddy current separation methods.

Figure 9 illustrates a prior art electromagnetic eddy current materials separator. In this system, a feedstream of concentrate is introduced to the field of eddy current magnet 201 along a path indicated by a line from point 219 to point 219A, which path lies outside fringe field region 212 and carries the feedstock directly into the region of strongest influence of magnetic field 214. The feedstream trajectory is smoothly changed by deceleration slide 227 to a direction optimum for entry of the feedstock into the region near the surface of eddy current magnet 201, where the interaction of the magnetic field with the feedstock will be strongest. Upon interaction with the magnetic field of the eddy current magnet 201, non-ferrous metals in the feedstream are pulsed transversely out of the feedstream into product stream 231 or the middling stream 232 and are collected in corresponding repositories. Non-metallics and ferrous metals are not repulsed by the magnetic field of the eddy current magnet 201 and fall into tailing stream 233.

A plurality of relatively low amplitude current pulses activate magnet 201. Each pulse is too small to give rise to sufficient repulsive force to effect separation of a non-ferrous metal from the feedstream. However, the cumulative effect of a plurality of successive impulses is sufficient to effect separation of non-ferrous metal from the feedstream. By detecting metals in the feedstream through the use of metal detector 265 and activating power unit 202 only upon a signal from the metal detector, eddy current magnet 201 can be activated only when non-ferrous metals are present in the region of strongest influence of the magnetic field. Metal detector 265 may, for example, be located externally to the eddy current magnet region adjacent the feedstream at a point upstream of the eddy current magnet. Typically this distance upstream is about 1 foot. Knowing the velocity of the feedstream and the distance between metal detector 265 and the region of strongest influence of the magnetic field 214 of eddy current magnetic 201, a proper time lag may be introduced between the occurrence of the detection signal from the metal detector and the time at which power unit 202 is activated, so that the metallics which were detected by metal detector 265 will be within the region of strongest influence of the magnetic field 214 when eddy current magnetic 201 is activated. While it would be possible to locate metal detector 265 directly in the region of strongest influence of the magnetic field and activate the eddy current magnet immediately upon metal detection, the intense magnetic fields at the magnet damage the metal detector inductive pickup coil. Thus, as previously discussed, it has been necessary to locate the metal detector coil at a distance approximately one foot upstream from the eddy current magnet. This arrangement, though workable, has the disadvantage that the time between detection of aluminum cans and firing of the magnet is sufficiently long so that variations in feed material speed significantly effect performance.

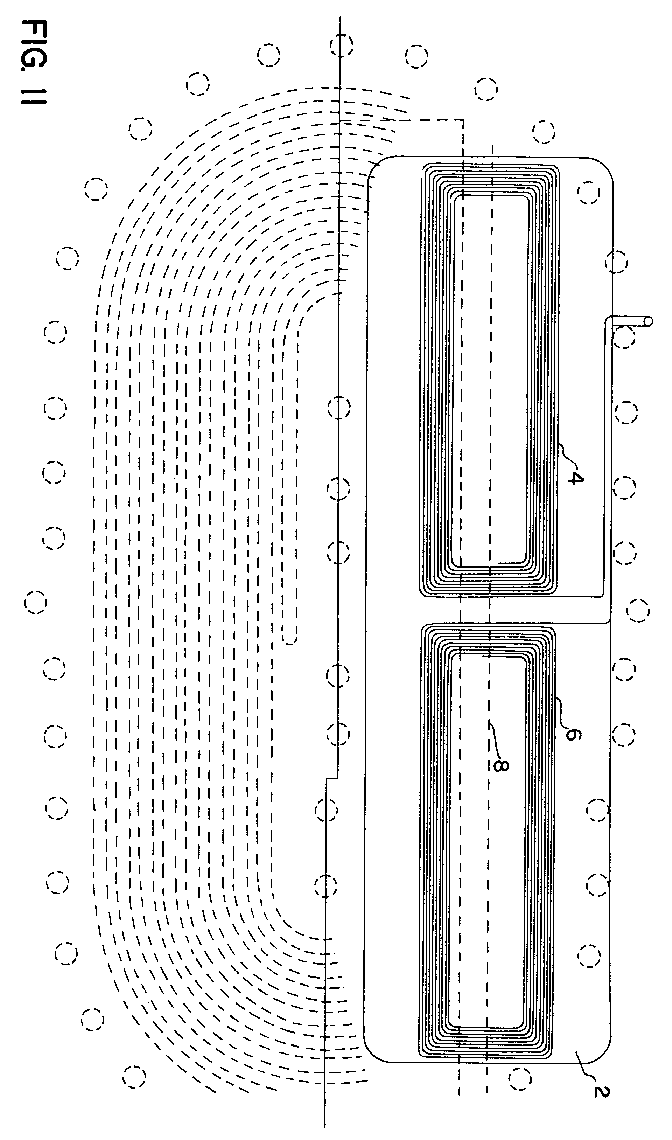

According to the invention, a new geometry of the metal detector coil is disclosed. As shown in Figure 11, the coil is arranged in an "figure eight" geometry. Each interconnected coil is Figure 11 typically has ten counterclockwise turns of wire. The typical outside dimensions of the outermost wire loops are 7 7/8″ by 2 1/2″, with the outside dimensions getting progressively smaller as the wire coils inward toward the center. Thus, the overall coil 2 is arranged with a pair of loops 4 and 6 in a figure eight configuration. The two loops 4 and 6 are interconnected such that their inductive responses to magnetic pulses through them are 180 degrees out of phase. When the metal detector coil is placed directly over the magnet face, the magnetic field from the magnet undergoes a spatial reversal within the interior region of the detector coil. Thus, at any given time, the net magnetic field integrated over the interior regions along a center line 8, as shown in Figure 11, is nearly zero. This minimizes inductive pickup by the detection coil from the magnet. Figure 12 illustrates detector coil 2 located over a portion of the magnet 10 and the resulting magnetic field profile 12. As illustrated in Figure 12, the magnetic field equal zero along the center of the magnetic coil.

The "figure eight" configuration of the metal detection coil minimizes inductive pickup by the coil from the eddy current magnet when it is energized, particularly when a piece of metal in the feedstream distorts the magnetic field from the magnet. The "figure eight" geometry acts so that inductive pickup by one of the loops 4, 6 adds to cancel the inductive pickup from the other loop of the figure eight, as previously discussed.

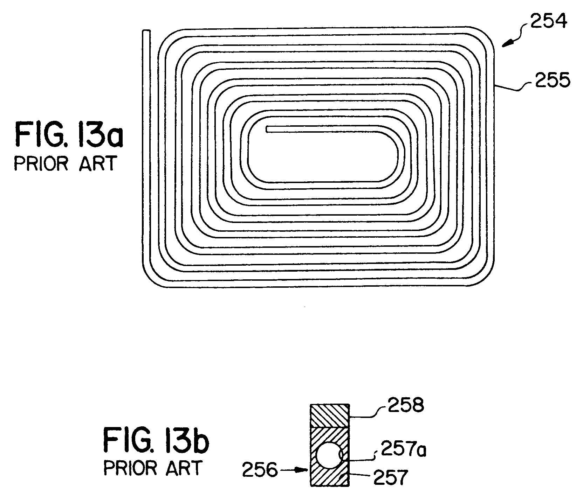

Figure 13a illustrates a prior art eddy current magnet 201 which employs a flat pancake coil 254 made from round, hollow copper tubing 255. The hollow interior of the copper tubing is coupled to a water pumping circuit to allow water to flow through the tubing for cooling purposes. A structural support or framework, not illustrated, prevents movement of the turns of the coil relative to each other as electrical current passes through it. Figure 13b illustrates an alternative prior art embodiment in which laminated conductor 256 is used for the magnetic winding 254 in place of round, hollow copper tubing 255. Laminated conductor 256 can be made of a steel support having a backing layer 257 and bore 257A for the cooling fluid with a copper conductor 258 affixed to support 257.

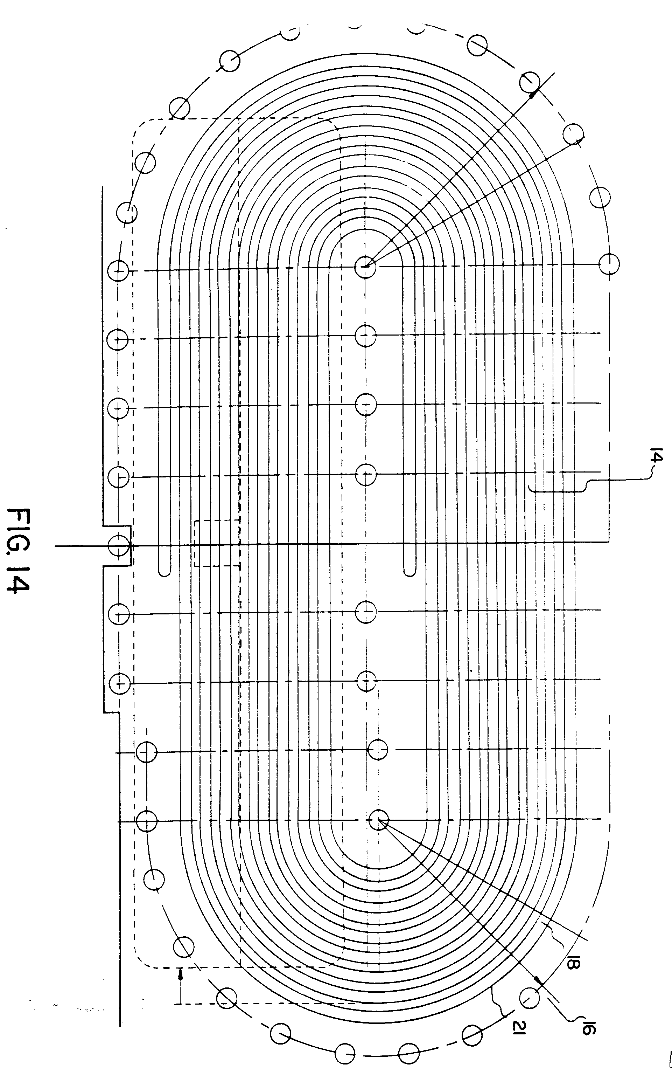

Figure 14 illustrates an improved electromagnet according to the present invention for high-purity magnetic separation. It should be noted that metal detector coil 2, previously discussed, would be located over region 14 of magnet 16. Magnet 16 includes cooling passages 18 in which a cooling medium of very low electrical conductivity, such as deionized water or a mixture of deionized water and ethylene glycol, is placed. Regular tap water is not used since the magnet would suffer damage from electrolysis due to the high voltages present. Within the cooling passages 18 are located multi-stranded wires 20. Each multi-strand is formed from a plurality of individually insulated wires twisted together to form a rope. A rope made from hundreds of strands of such wire is desirable. The number of ropes and the gauge of each wire used in the strand is a function of the operating frequency of the magnet. The radius of the wire strand should be equal to the skin depth of penetration of electromagnetic energy at the frequency of the operation of the magnet. This is given by the formula:

$$\gamma = \frac{C}{\sqrt{2\pi\mu\omega\sigma}}$$

where C = the speed of light, $\mu$ = permeability of the medium, $\omega = 2\pi f$ (f equals frequency), and $\sigma$ = conductivity of the medium. It should also be noted that magnet 16 is encased in a casing of nonconductive material to prevent inductive loss of energy from the magnet to the casing. If the casing were made from a conductive material, such as metal, such inductive loss of energy would occur.

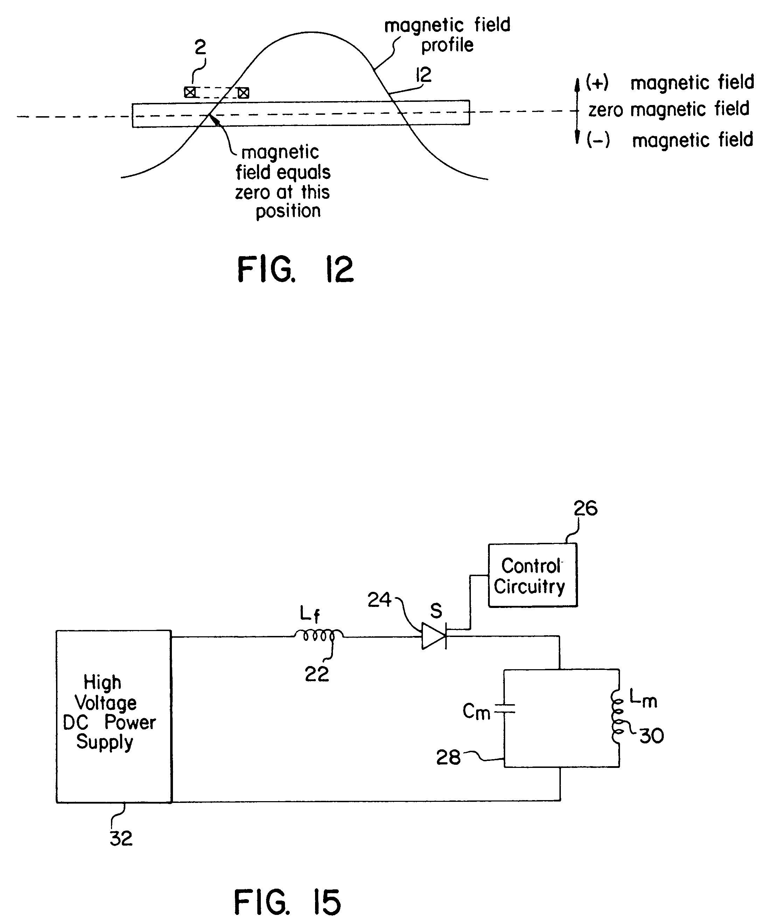

Figure 15 shows a single pumped resonant circuit used to drive the eddy current magnet, according to the invention. The circuit is less complex, less expensive and more reliable than prior art circuits, such as those disclosed in U.S. Patent 4,069,145. The drive circuit incorporates a current limiting feed inductor 22 and a silicon controlled rectifier switch 24 gated by control circuitry 26 connected to the eddy current magnetic resonance capacitor 28 and eddy current magnet 30. The drive circuit is energized by the high voltage DC power supply 32 based on detections made by metal detector coil 2 such that silicon controlled rectifier switch 24 is switched on by control circuit 26 in response to these detections. Switching on silicon controlled rectifier switch 24 causes electrical current to flow from power supply 32 through the eddy current magnet 30, which then resonates with capacitor 28. This resonance is then pumped once per resonate cycle by further switching silicon controlled rectifier 24 at appropriate times during the cycle in response to gate signals from control circuitry 26. This pumping sequence continues for a time sufficient for the metallic particles which initiated the sequence to be ejected, such time being typically the time required for ten to fifty resonant cycles to occur.

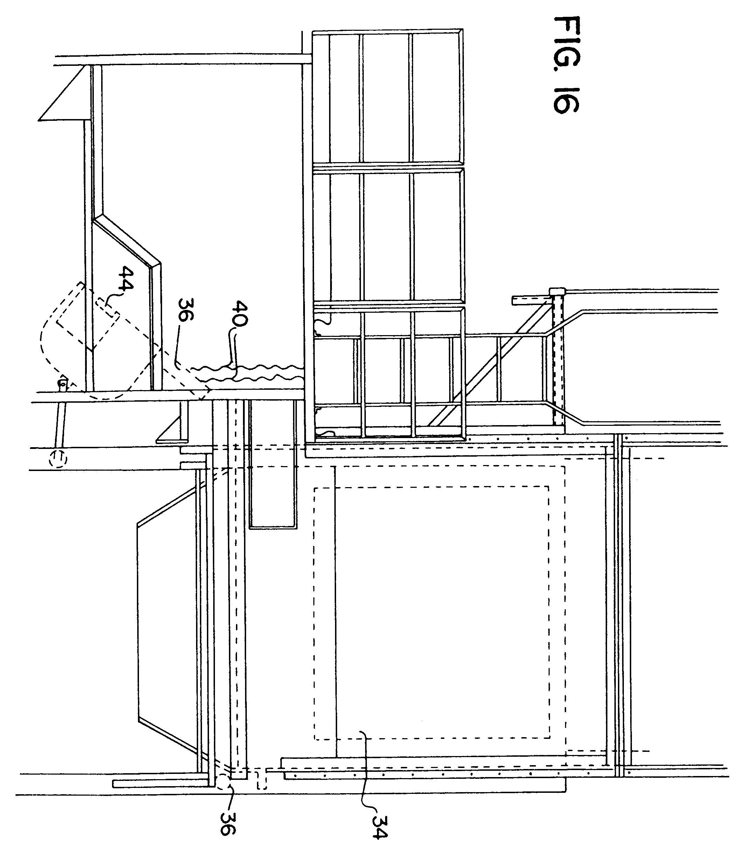

Figure 16 illustrates an assembly of the magnetic separator according to the invention. As shown in Figure 16, material to be subjected to high-purity separation is first preconcentrated by separator 34, as shown in Figure 4, and transported by conveyor 36 to be dropped on slide 38. Curtains 40 operate to prevent bouncing materials from sliding down slide 38. An eddy current magnet 42 and metal detector 44 are incorporated in the manner as previously discussed for the prior art electromagnetic eddy current material separator.

While specific embodiments of the invention have been described and illustrated, it will be clear that variations in the details of the embodiments specifically illustrated and described may be made without departing from the true spirit and scope of the invention as defined in the appended claims.

## Claims

1. An apparatus for separating particles in a mixture of ferrous and non-ferrous metallic and non-metallic materials, the apparatus comprising:

   an intake disposed to receive the particles and deposit the particles in a first conveyor;

   a multi-stage slide, the stages being disposed end to end, a first stage being disposed to receive particles falling from the conveyor and each additional stage physically positioned in a discontinuous, stepped relationship with the preceding stage, whereby unejected particles from each stage tumble to the preceding stage;

   each stage having at least one detector coil with changing inductance depending on the proximity of non-ferrous materials, a circuit for generating a frequency phase error signal responsive to the changing inductance of the coil, and a particle removal mechanism activated by the frequency phase error signal to eject certain of the particles having predetermined properties; and

   deposit locations for the ejected and unejected particles.

2. The apparatus recited in claim 1 further comprising anti-bounce curtains positioned proximate to the first stage of the multi-stage slide to contact particles entering the slide, thereby reducing bouncing of the particles.

3. The apparatus recited in claim 1 further comprising a slope adjuster for varying angle of inclination of at least one of the stages of the multi-stage slide.

4. The apparatus recited in claim 1, wherein the conveyor is adjustable to an angle of inclination greater than an angle of repose of the particles, whereby particles piled in the conveyor fall back to a predetermined vertical height.

5. The apparatus recited in claim 1, wherein the particle removal mechanism is an air nozzle activated at a time relative to the phase error signal to eject predetermined particles into one of the deposit locations.

6. The apparatus recited in claim 5, wherein air path lengths through respective nozzles are approximately equal and wherein momentum imparted to the particles by each air nozzle is approximately equal.

7. The apparatus recited in claim 1, wherein each stage of the multi-stage slide comprises a plurality of detector coils disposed in a staggered relationship laterally across from one another on opposite sides of the slide.

8. The apparatus recited in claim 7, wherein the circuit for generating a frequency phase error signal comprises a self tuned resonant circuit.

9. The apparatus recited in claim 8, wherein the self tuned resonant circuit comprises a plurality of capacitors and switches, the switches being operable to switch capacitors in and out of the circuit to maintain a resonant frequency within a predefined range of a predetermined resonant frequency.

10. The apparatus recited in claim 1, further comprising:

    a second conveyor disposed to receive the ejected particles and to carry the particles to a second slide having a slide portion on which slide portion the particles slide;

    an eddy current magnet having a magnetic face portion over which the slide portion of the second slide passes; and

    a detection coil disposed over the eddy current magnet so that a magnetic field from the magnet undergoes a spatial reversal within an interior region of the detection coil.

11. The apparatus recited in claim 10, wherein the net magnetic field within the interior region of the detection coil is near zero.

12. The apparatus recited in claim 10, wherein the metal detection coil comprises wire coiled in a figure eight shape.

13. The apparatus recited in claim 8, wherein the figure eight shape comprises a pair of wire loops, and wherein inductive pickup in one of the loops acts to cancel inductive pickup in the other of the loops.

14. The apparatus recited in claim 10, wherein the magnet comprises a plurality of individually insulated wire strands twisted together.

15. The apparatus recited in claim 14, wherein the number of wire strands in the plurality is selected in a predetermined relation to magnet operating frequency.

16. The apparatus recited in claim 14, wherein a radius of each wire is selected in a predetermined relation to magnet operating frequency.

17. The apparatus recited in claim 16, wherein the radius of each wire equals the skin depth of penetration of electromagnetic energy of the frequency of operation of the magnet.

18. The apparatus recited in claim 16, wherein the radius of the wire is

$$\gamma = \frac{C}{\sqrt{2\pi\mu\omega\sigma}}$$

where C=speed of light, $\mu$=permeability of the wire; $\omega=2\pi$ frequency; $\sigma$=conductivity of the wire.

19. The apparatus recited in claim 14, further comprising a cooling medium of very low electrical conductivity, the cooling medium surrounding the twisted wire strands.

20. The apparatus recited in claim 19, wherein the cooling medium is deionized water.

21. The apparatus recited in claim 19, wherein the cooling medium is a mixture of deionized water and ethylene glycol.

22. The apparatus recited in claim 10, further comprising a non-conductive casing around the magnet.

23. The apparatus recited in claim 10, wherein the eddy current magnet comprises an electromagnet driven by a pumped resonant circuit.

FIG. I

FIG. 8

NON-METALLIC PARTICLES

NON-FERROUS METTALIC PARTICLES

10 13

12

CONVEYOR

14

SLIDE

16

FERROUS METALLIC PARTICLES

DETECTOR COILS

ELECTRONIC ACTIVATION SYSTEM

20

18

SPLITTER

30

12

22

NON-FERROUS METALLIC PARTICLES REMOVER

10

13

28

32

FIG. 2

PRIOR ART

FERROUS METALLIC AND NON-METALLIC RESIDUE CONVEYOR

NON-FERROUS METALLIC CONCENTRATE CONVEYOR

PHASE LOCK LOOP

50

DETECTOR COILS DRIVE CIRCUIT

52

DETECTOR COILS

54

OUTPUT FREQUENCY FILTER

56

AMPLIFIER

58

NON-FERROUS METALLIC PARTICLE REMOVER

62

TIME DELAY CIRCUIT

60

FIG. 3

PRIOR ART

12

FIG. 4

CATCHER

SLIDE

FIG. 5

EP 0 541 403 A2

FIG. 6

15

FIG. 7

# FIG. 10
## PRIOR ART

# FIG. 9
## PRIOR ART

FIG. II

FIG. 13a
PRIOR ART

254

255

FIG. 13b
PRIOR ART

258

257a

256

257

FIG. 14

EP 0 541 403 A2

FIG. 12

FIG. 15

FIG. 16